# EUROPÄISCHE PATENTSCHRIFT

(11) **EP 2 338 348 B1**
(45) Veröffentlichungstag und Bekanntmachung des Hinweises auf die Patenterteilung: **30.03.2016**
(21) Anmeldenummer: 10189884.9
(22) Anmeldetag: 24.11.2008
(51) Int. Cl.: A22C 11/00, A23L 13/40, A23L 13/60

(54) **Verfahren zur automatisierbaren Herstellung von Rohwurst**
Method for the automatable production of raw sausage
Procédé de fabrication automatisé de saucisse crue

(30) Priorität: 13.12.2007 DE 102007059993; 14.01.2008 DE 102008004242
(43) Veröffentlichungstag der Anmeldung: 29.06.2011
(62) Teilanmeldung aus: 08859019.5
(73) Patentinhaber: DEUTSCHES INSTITUT FüR LEBENSMITTELTECHNIK e.V., 49610 Quakenbrück (DE); Triton Gmbh, 14089 Berlin (DE)
(72) Erfinder: Heinz, Volker, 49610 Quakenbrück (DE); Kortschack, Fritz, 14089, Berlin (DE); Toepfl, Stefan, 49080 Osnabrück (DE); Hukelmann, Bernhard, 49610 Quakenbrück (DE)
(74) Vertreter: Kruspig, Volkmar

(56) Entgegenhaltungen:
- EP-A- 0 668 026
- EP-A- 0 835 608
- WO-A-98/26667
- DE-B- 1 161 495
- DE-C1- 4 326 688
- US-A- 3 992 985
- LEHMANN G: "HOCHDRUCKBEHANDLUNG - EINE NEUE LEBENSMITTELTECHNOLOGIE", FLEISCHWIRTSCHAFT, FRANKFURT, DE, Bd. 76, Nr. 10, 1. Januar 1996 (1996-01-01), XP002061566, ISSN: 0015-363X

## Beschreibung

Die Erfindung betrifft ein Verfahren zur automatisierbaren Herstellung von Rohwurst durch Zerkleinern und Mischen von Fleischteilen oder Fleischstücken sowie Zugeben von Starterkulturen, Gewürzen oder dergleichen Stoffen gemäß Oberbegriff des Patentanspruchs 1.

Aus der EP 0 835 608 B1 ist ein Zerkleinerungs- und Emulgierautomat zum Herstellen von Wurstbrät für Rohwurst-Dauerware, Kochwurst, Brühwurst oder dergleichen mit einer wählbaren Körnung des Wurstbräts aus grobstückig chargiertem Fleisch in die jeweilige Brätart des Endprodukts vorbekannt.

Dort wird dargelegt, dass bei der Herstellung von Wursterzeugnissen eine Zerkleinerung in Zerkleinerungsmaschinen erfolgt, die nach dem sogenannten Wolfprinzip arbeiten. Das Zusammenspiel zwischen technologischen Verfahrensschritten und konstruktiven Varianten der eingesetzten Maschinen bestimmen die Qualität des Endprodukts, aber auch die Effektivität beim Herstellungsprozess selbst.

Beim Wolfprozess erfolgt einerseits eine Förderung des Aufgabeguts und andererseits eine Zerkleinerung der aufgegebenen Komponenten. Dies bedeutet, dass über bestimmte Fördersysteme, insbesondere den Förderschnecken, das Wolfgut transportiert wird und einer Verdichtung unterliegt und in diesem Zustand auf ein Schneidsystem gelangt, das letztendlich die gewünschte Zerkleinerung bewirkt. Bei den Wolfmaschinen wird von einer Reibungsförderung ausgegangen, wobei das derart über die Förderschnecken komprimierte Material mit Hilfe der Zerkleinerungsmesser abgetrennt, insbesondere abgeschnitten wird. Es erfolgt demnach eine Druckförderung des Gutes zum Schneidsatz, wobei die Förderschnecken die Aufgabe besitzen, das Wolfgut zu stützen und zu komprimieren.

Es hat sich jedoch gezeigt, dass beim Komprimieren, aber auch beim eigentlichen Förderschritt eine unzulässige Temperaturerhöhung im Behandlungsgut eintritt. Hierbei können durch Quetschvorgänge weiche Fettschichten im Rohbrät abgelagert werden, was einen wesentlichen Nachteil für die Qualität des Ausgangsprodukts darstellt. Auch ist eine gleichmäßige Wasserabgabe während der Trocknungsphase behindert. Diese nachteiligen Folgen treten insbesondere dadurch auf, dass im Regelfall die Förderschnecken unmittelbar die Drehbewegung der Zerkleinerungseinrichtung des Wolfes erzeugen, d.h. dass eine Kopplung zwischen dem Schneckenantrieb und dem Antrieb der Zerkleinerungseinrichtung, z.B. eines rotierenden Messers gegeben ist.

Es schlägt zwar die Lehre nach EP 0 835 608 B1 vor, über eine externe Arbeitswelle, die im zweiten Förder- und Schneidsystem gelagert ist, den Antrieb der Schneidsätze des Wolfes zu realisieren, jedoch wird nicht erkannt, dass es grundsätzlich von Vorteil ist, das Wolfgut unabhängig vom eigentlichen Schneidsystem zu fördern, um eine optimale Qualität der Ausgangsprodukte sicherzustellen.

Aus der WO 98/26667 ist ein Verfahren vorbekannt, mit dessen Hilfe durch Einwirkung von Hochdruck der pH-Wert von Rohdauerwaren quasi eingefroren werden kann. Das dort vorgestellte Verfahren fordert, dass nach Erreichen eines bestimmten pH-Wertes die Produkte wasserdicht umhüllt und nach der Reifung und einer Teiltrocknung einer mehrere Minuten anhaltenden Hochdruckbehandlung unterworfen werden.

Aus dem Vorgenannten ist es daher Aufgabe der Erfindung, ein weiterentwickeltes Verfahren zur automatisierbaren Herstellung von Rohwurst durch Zerkleinern und Mischen von Fleischteilen oder Fleischstücken sowie Zugeben von Starterkulturen, Gewürzen oder dergleichen Stoffen anzugeben, welches ein klares und qualitativ hochwertiges Schnittbild des Fertigprodukts gewährleistet und bei welchem eine gleichmäßige Wasserabgabe und damit Trocknung des Produkts gegeben ist, wobei grundsätzlich eine schonende Behandlung des Rohmaterials gewährleistet werden soll.

Die Lösung der Aufgabe der Erfindung erfolgt mit einem Verfahren gemäß der Lehre nach Patentanspruch 1, wobei die Unteransprüche mindestens zweckmäßige Ausgestaltungen und Weiterbildungen darstellen.

Erfindungsgemäß werden die gegebenenfalls vorzerkleinerten Fleischteile oder Fleischstücke als Aufgabegut über ein vom eigentlichen Zerkleinerer antriebsseitig separat betreibbares Transportsystem, insbesondere Mehrfachkolben-Zylindersystem dem Zerkleinerungsraum zugeführt. Dabei erfolgt dieses Zuführen des Aufgabeguts grundsätzlich in Abhängigkeit von der Leistungsfähigkeit des oder der nachgeschalteten Zerkleinerer. Auf diese Weise ist sichergestellt, dass ein unerwünschtes Aufstauchen sowie eine ungünstige Temperaturerhöhung und damit eine Schädigung des Aufgabeguts vermieden wird. Als Zerkleinerer können Walzenextruder, insbesondere Planetenwalzenextruder, angepasst an die Belange der Lebensmittelverarbeitung eingesetzt werden. Weiterhin ist der Zerkleinerungs- vom Mischraum getrennt, jedoch koppelbar, um je nach zu verarbeitendem Produkt eine einfache Umstellung für verschiedene Zerkleinerer vornehmen zu können.

Ist beispielsweise aufgrund eines schwer zerkleinerbaren Aufgabeguts es notwendig, die Zuführmenge über das Mehrfachkolben-Zylindersystem zu reduzieren, kann dies durch eine einfache Regelung erfolgen. Hier würde also das Mehrfachkolben-Zylindersystem den Schneidsätzen des Zerkleinerers immer nur die Menge übergeben und bereitstellen, die unter Wahl der entsprechenden Leistungsparameter des Zerkleinerers bearbeitet werden kann.

Es besteht ergänzend die Möglichkeit, das Füllen in einen Unterdruckraum hinein vorzunehmen, wobei die Strömungsgeschwindigkeit im Schneidsystem durch die erzeugte Sog-Unterdruckwirkung erhöht wird. Neben der erhöhten Durchtrittsmenge durch das Schneidsystem wird gleichzeitig ein evakuiertes Brät erzeugt, das zu seiner Entlüftung keiner weiteren Unterdruckbehandlung bedarf. Der später noch erläuterte Trocknungsbehälter kann hier auch gleichzeitig oder alternativ als Unterdruckraum Verwendung finden. Der Trocknungs- oder Unterdruckbehälter kann an- und abklappbar ausgeführt sein.

Bei einer bevorzugten Ausführungsform ist am Zerkleinerungs- oder Mischraum ein Trocknungsbehälter angekoppelt, welcher austauschbare Adsorbentien aufnimmt, um Wasser oder Wasserdampf aus dem behandelnden Gut im Sinne einer Vortrocknung aufzunehmen.

Es sei an dieser Stelle angemerkt, dass anstelle des Vortrocknungsschritts bei der Herstellung von Brühwurst- oder Kochwurstbrät auch eine Flüssigzugabe in den Zerkleinerungs- oder Mischraum erfolgen kann.

Ebenso ist es möglich, die Vortrocknung in einem vorgelagerten groben Vormischschritt der Ausgangskomponenten durchzuführen.

Das vorgetrocknete, damit volumenreduzierte und in lockerer Struktur vorliegende Gut wird dann portioniert bzw. abgewogen auf eine Unterfolie gelegt, auf die eine Oberfolie aufgebracht wird. Hiernach wird die eingeschlossene Luft entfernt. Die genannten Folien sind wasserundurchlässig. Auch ist der Einsatz einer Folienhülle oder eines Foliensacks möglich.

Das Gut oder Brät wird dann quasi innerhalb der wasserundurchlässigen Folien geformt, was mit einem stempelartigen Druckkörper möglich ist. Bis zum Erreichen des isoelektrischen Punktes im Behandlungsgut verbleibt der Formstempel auf dem Gut im Sinne einer Druckbehandlung.

Das in der Folie befindliche Brät wird während der Reifephase einer gezielten Temperierung unterzogen, um die Aktivität der für den Reifeprozess verantwortlichen Mikroorganismen zu steuern. Diese Temperaturbehandlung kann bevorzugt in einem Flüssigkeits-, insbesondere Wasserbad erfolgen.

Die vorgeformten Brätrohlinge werden dann einer Hochdruckbehandlung zur Inaktivierung der Mikroorganismen unterzogen und danach der Folienumhüllung entnommen, einem Endtrocknungsschritt unterzogen und weiter verarbeitet.

Das Gut kann im Zerkleinerungs- und Mischraum einem Vakuum ausgesetzt werden. Weiterhin besteht die Möglichkeit, am Zerkleinerungs- oder Mischraum einen Dosierer zur Zugabe von Hilfsstoffen anzuschließen

Die Temperierung innerhalb des Flüssigkeits-, insbesondere Wasserbads erfolgt entweder in Richtung einer Temperaturerhöhung oder einer Temperaturabsenkung des Behandlungsguts. Dadurch, dass das Gut sich in wasserundurchlässigen Folien befindet, kann die Temperierflüssigkeit allseitig mit dem Gut in Kontakt kommen, so dass bei reduziertem Energieeinsatz ein optimaler Wärme- oder Kühlschritt möglich ist.

Durch den Vortrocknungsvorgang im Zerkleinerungs- oder Mischraum und den dabei ablaufenden Verdunstungsvorgängen von Wasser findet eine gezielte Temperaturabsenkung des Gutes statt. Eine durch den Schneidvorgang auftretende Guterwärmung wird hierdurch mindestens kompensiert.

Letztendlich können die der Folienumhüllung entnommenen Brätrohlinge einer Geschmacks- und/oder das Aussehen verändernden Nachbehandlung unterzogen werden.
Diese Nachbehandlung kann mit Flüssigrauch, Gewürzen und/oder Edelschimmel oder dergleichen erfolgen.

Die Erfindung soll nachstehend anhand eines Ausführungsbeispiels sowie unter Zuhilfenahme einer Prinzipskizze näher erläutert werden.

Wie bereits erläutert, wird das Behandlungsgut unabhängig vom eigentlichen Schneidsystem in den Zerkleinerungs- und Mischraum befördert, was bevorzugt durch ein Doppelkolbensystem realisierbar ist.

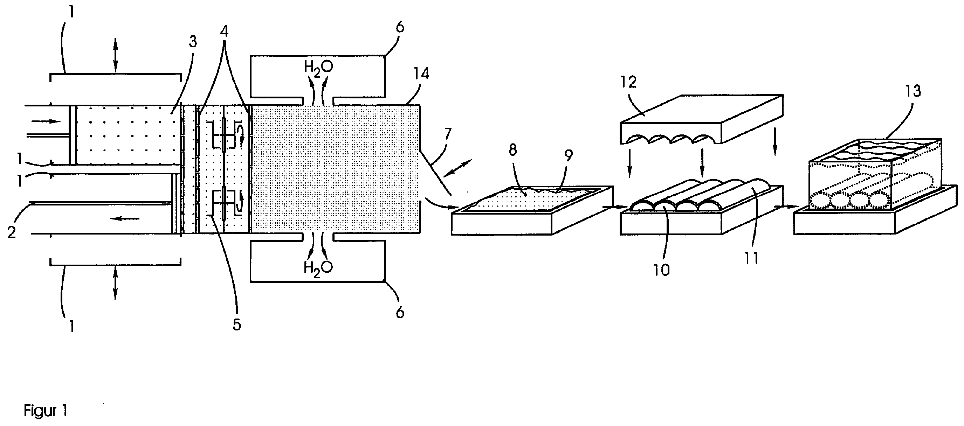

Gemäß der Darstellung nach der Fig. 1 ist das Doppelkolben-Fördersystem aus einer Kombination von Halbzylinderschalen bestehend. Die Halbzylinderschalen 1 können geöffnet werden, so dass abwechselnd Gut aufgegeben werden kann und eine quasi kontinuierliche Beaufschlagung der Zerkleinerer 5 im Zerkleinerungs- und Mischraum 14 möglich wird.

Die Fördereinrichtung umfasst eine Kombination von Kolbenstangen mit Kolben 2, die über einen hier nicht gezeigten Antrieb verfügen. Die Pfeildarstellungen symbolisieren die Bewegungsrichtung der Kolbenstange mit Kolben 2 bzw. die Doppelpfeildarstellung das Öffnen und Schließen einer entsprechenden Halbzylinderschale 1 des betreffenden Zylinderraums.

Ausgangsseitig des Förderers sind Lochscheiben 4 angeordnet, durch die das Aufgabegut hindurchtritt, um dann der Wirkung der Zerkleinerer 5 ausgesetzt zu werden. Diese Zerkleinerer können beispielsweise rotierende Messer aufweisen, die separat und unabhängig vom Doppelkolben-Förderer angetrieben werden. Bei der Feinbrätherstellung kann auf Extruder, insbesondere Walzenextruder zur Zerkleinerung zurückgegriffen werden. Durch den Einsatz eines Walzenextruders werden auch kritische Grobbestandteile, insbesondere Kollagene, zermahlen und der Lufteintrag im Vergleich zu bekannten Kutterverfahren minimiert. Dies bedeutet, dass die Qualität des erhaltenen Endprodukts steigt. Der Zerkleinerungs- und Mischraum 14 ist gemäß Fig. 1 als ein einheitlicher kompakter Raum bezeichnet. Erfindungsgemäß ist es allerdings vorgesehen, zwischen einem Auffangraum und einem eigentlichen Zerkleinerungsraum zu differenzieren und eine Kopplung zwischen diesen beiden Gefäßen oder Räumen vorzusehen. Hierdurch können verschiedene Zerkleinerer, wie z.B. die vorerwähnten Extruder oder aber auch ein klassischer Wolf, zum Einsatz kommen, d.h. es ist je nach dem zu verarbeitenden Produkt eine einfache Umstellung der für die Verfahrensrealisierung notwendigen Vorrichtung und Anpassung dieser an die jeweiligen Gegebenheiten möglich.

Die Transport- und Fließgeschwindigkeit des Aufgabeguts lässt sich mit dieser Konfiguration optimal auf die jeweiligen Eigenschaften einstellen, so dass druck- und/oder reibungsbedingte Schädigungen des Gutes vermeidbar sind. Den unabhängig arbeitenden Zerkleinerern 5 werden vorzerkleinerte Ausgangskomponenten 3 exakt in der Menge zugeführt, wie zerkleinert werden können. Ein Aufstauchen von Rohmaterialien vor oder zwischen den Zerkleinerern 5 ist ausgeschlossen.

Im einzelnen nicht dargestellte nacheinander angeordnete Vorschneider, Messer und Lochscheiben lassen unabhängig von der Rohstoffzusammensetzung, der Umdrehungszahl der Messer oder auch Scheiben, der Anordnung der Messer und Scheiben zueinander und deren Geometrie einen begrenzt möglichen Durchfluss an zu bearbeitendem Aufgabegut zu.

Die separate Vortriebs- und Fördereinheit und die eigenständig angetriebene Schneid- und Zerkleinerungseinrichtung ermöglichen außerordentlich viele Bearbeitungsvarianten, und zwar vom klaren Schneiden hin bis zur Feinstzerkleinerung und Emulgation des zu bearbeitenden Materials.

Es ist bekannt, dass der Wasserentzug, d.h. die Senkung des sogenannten aw-Wertes und die Säuerung des Rohmaterials, d.h. die Einstellung des pH-Wertes, mit ausschlaggebend für die Stabilität von Rohwursterzeugnissen sind.

Um eine gewünschte Abtrocknung im Sinne eines Vortrocknungsschritts zu erzielen, ist am Zerkleinerungs- und Mischraum 14 ein Trocknungsbehälter 6 angekoppelt, der Adsorbientien aufweist und in einer Ausführungsform mit einer Unterdruck-Erzeugungseinrichtung in Verbindung steht. Der Zerkleinerungs- und Mischraum 14 kann auch aus koppelbaren, getrennten Gefäßen oder Körpern bestehen. Hierdurch besteht die Möglichkeit, verschiedene, nach Produktart auszuwählende Zerkleinerer, z.B. einen Kutter oder einen Extruder einzusetzen.

Ein solcher quasi aktiver Trocknungsbehälter 6 sorgt durch seine hygroskopisch wirkenden Inhaltsstoffe dafür, dass das freie Wasser in den zerkleinerten Rohstoffen im gasförmigen Zustand sehr schnell vom zu behandelnden Gut zur Trocknungseinrichtung transportiert wird. Ein besonderer Vorteil besteht darin, dass durch die Verdunstung des Wassers im Behandlungsgut Verdunstungskälte entsteht, was der Produkterwärmung entgegenwirkt.

Die für die Rohwursterzeugung notwendigen Starterkulturen zur Fermentierung erfordern für deren Aktivitäten einen definierten aw-Wert. Je nach Zusammensetzung der Ausgangsstoffe und Rohmaterialien ist auf die Einhaltung einer maximal sinnvollen Abtrocknungsrate zu achten.

Durch eine Ermittlung der Gewichtszunahme im Trocknungsbehälter während des Trocknungsprozesses kann der Zeitpunkt ermittelt werden, ab dem eine fortgesetzte Trocknung die Aktivitäten der Mikroorganismen unerwünscht beeinträchtigen würde. Zu diesem Zeitpunkt kann dann eine Trennung oder Absperrung der Trocknungsbehälter vom Zerkleinerungs- und Mischraum vorgenommen werden.

Es sei darauf aufmerksam gemacht, dass der Zerkleinerungs- und Mischraum 14 einerseits nach dem Wolfprinzip arbeitende Zerkleinerer enthalten kann, andererseits aber auch als bekannter Kutter ausführbar ist.

Ausgangsseitig des Zerkleinerungs- und Mischraums 14 wird dann über eine Entnahmeöffnung 7 das in relativ lockerer Struktur vorliegende Gut entnommen und gewichtsgenau auf einen mit einer Unterfolie 8 ausgelegten Rahmen verbracht oder in einen Foliensack eingefüllt.

Eine Oberfolie 10 umschließt das Gut. Bevorzugt mit Hilfe eines anzulegenden Vakuums werden dann vorhandene Lufteinschlüsse entfernt und die Folien 8 und 10 an ihren Rändern fest miteinander verbunden.

Das aufgenommene Brät wird durch die Annäherung eines Druckkörpers 12 in dem durch den Rahmen festgelegten Raum verteilt und in die gewünschte Form, z.B. gleichmäßig dicke und lange Stränge gebracht. Hierfür kann der Druckkörper 12 eine entsprechende Strukturierung an der Seite aufweisen, die mit der Oberfolie 10 und damit dem Gut 9 in Kontakt kommt. Selbstverständlich besteht auch die Möglichkeit, dass der Rahmen eine Formplatte aufnimmt, wobei die Unterfolie 8 dann auf dieser Formplatte liegt und das Gut 9 aufnimmt.

Während der Reifephase wird einerseits zur Formgebung und Komprimierung und andererseits bis zum Erreichen des isoelektrischen Punktes Druck auf das Gut 9 ausgeübt.

Um die Funktion der verwendeten Folie zur Brätformgebung und den auf das Brät auszuübenden Druck so lange zu unterstützen, bis der isoelektrische Punkt von ca. pH 5,4 oder der gewünschte End-pH-Wert von ≤ 5,2 erreicht ist, kann zusätzlich eine wiederverwendbare Form, z.B. auf der Basis einer zweiten Folienumhüllung eingesetzt werden.

Das geformte Gut 11 wird weiterhin während der Reifungsphase temperiert, was beispielsweise durch erwärmte Flüssigkeit, insbesondere Wasser erfolgt. Zu diesem Zweck sind die eingesetzten Folienmaterialien auch wasserdicht. Hier ist auch ausgeschlossen, dass eine unerwünschte Kontamination der Rohprodukte mit Keimen eintritt oder dass eine qualitätsschädigende aw-Werterhöhung die Folge ist.

Wenn der gewünschte pH-Wert erreicht ist, der die entsprechende Eiweißdenaturierung signalisiert, kann die Temperierflüssigkeit als Kühlmedium für die wasserdicht umhüllten Rohwurst-Rohlinge genutzt werden. Auch hierdurch ist die Aktivität der Mikroorganismen steuerbar.

Im Ergebnis dieser Behandlung soll der pH-Wert auf den gewünschten Wert der Säuerung, ca. pH 5,2, eingestellt sein, um dann durch eine Hochdruckbehandlung ein gezieltes Inaktivieren der Mikroorganismen auszuführen.

Der Reifeprozess lässt sich gemäß vorstehender Schilderung einfacher und kostengünstiger in die Fertigung integrieren, ohne dass, wie im Stand der Technik üblich, energieaufwendige Klimakammern zum Einsatz kommen. Diese Klimakammern weisen darüber hinaus den Nachteil auf, dass die für die Erwärmung des Bräts notwendige temperierte Luft, deren relative Luftfeuchtigkeit zur Vermeidung von Trockenrändern voreingestellt sein muss, einer aufwendigen keimmindernden Behandlung zu unterziehen ist.

Um den Fertigungsprozess der Rohwurst abzuschließen, werden die Rohlinge aus dem Temperierbad 13 entnommen und einem Trocknungsschritt unterzogen. Hierfür wird die Kombination aus Unter- und Oberfolie 8; 10 geöffnet und der Rohling auf eine wasserdurchlässige Form gelegt und in einen Trocknungsraum verbracht, in dem fakultativ ein Unterdruck erzeugbar ist. Durch den Unterdruck wird das an die Oberfläche der Rohlinge tretende Wasser schneller in den Dampfzustand überführt. Auch hier lässt sich der Abtransport des Wassers durch den Einsatz von Adsorbentien unterstützen. Der geschilderte End-Trocknungsvorgang verhindert, dass sich Mikroorganismen auf der Oberfläche der Rohwurst-Rohlinge ansiedeln. Nach dem Erreichen des gewünschten Trocknungsgrads kann dann eine Behandlung der Oberfläche der Rohwurst-Rohlinge z.B. mit Flüssigrauch, Edelschimmel oder ähnlichen Stoffen erfolgen.
Das Produkt ist jetzt vermarktungsreif und kann z.B. zur Herstellung von Aufschnittpackungen weiter verarbeitet werden.

### Bezugszeichenliste

- 1: Halbzylinderschalen
- 2: Kolbenstange mit Kolben
- 3: vorzerkleinerte Ausgangskomponenten
- 4: Lochscheibe
- 5: Zerkleinerer mit rotierenden Messern
- 6: Trocknungsbehälter mit Adsorbentienbefüllung
- 7: Entnahmeöffnung
- 8: Unterfolie
- 9: Gut
- 10: Oberfolie
- 11: geformtes Gut
- 12: Druckkörper
- 13: Temperierbad, ggf. kombiniert mit Hochdruckbehandlung
- 14: trennbarer Zerkleinerungs- und Mischraum

## Patentansprüche

1. Verfahren zur automatisierbaren Herstellung von Rohwurst durch Zerkleinern und Mischen von Fleischteilen oder Fleischstücken sowie Zugeben von Starterkulturen, Gewürzen oder dergleichen Stoffen,
**dadurch gekennzeichnet, dass**
die Fleischteile oder Fleischstücke als Aufgabegut (3) über ein vom Zerkleinerer (5) antriebsseitig separat betreibbares Transportsystem dem Zerkleinerungsraum in Abhängigkeit von der Leistungsfähigkeit des oder der Zerkleinerer (5) zugeführt werden, wobei die Zuführung derart erfolgt, dass ein Aufstauchen sowie eine Temperaturerhöhung und damit eine Schädigung des Aufgabeguts vermieden wird, wobei als Zerkleinerer (5) ein Extruder, bei der Feinbrätherstellung insbesondere ein Walzenextruder, eingesetzt wird und weiterhin der Zerkleinerungs- vom Mischraum getrennt, jedoch koppelbar ist, um je nach zu verarbeitendem Produkt eine einfache Umstellung für verschiedene Zerkleinerer (5) vornehmen zu können,
das in lockerer Struktur vorliegende Gut portioniert oder abgewogen in einen Foliensack gefüllt oder auf eine Unterfolie (8) gelangt, weiterhin eine Oberfolie (10) aufgebracht und eingeschlossene Luft entfernt wird,
das Gut oder Brät (9) innerhalb der wasserundurchlässigen Folien (8; 10) geformt und bis zum Erreichen des isoelektrischen Punktes im Gut einer (9) Druckbehandlung ausgesetzt bleibt,
das in der Folie (8; 10) befindliche Brät (9) während der Reifephase einer Temperierung unterzogen wird, um die Aktivität der für den Reifeprozess verantwortlichen Mikroorganismen zu steuern,
und dass die vorgeformten Brätrohlinge (11) einer Hochdruckbehandlung zur Inaktivierung der Mikroorganismen ausgesetzt und danach der Folienumhüllung (8; 10) entnommen, einem Trocknungsschritt unterzogen und weiterverarbeitet werden.

2. Verfahren nach Anspruch 1,
**dadurch gekennzeichnet, dass**
das Gut (3) im Zerkleinerungs- und Mischraum einem Vakuum ausgesetzt ist.

3. Verfahren nach Anspruch 1 oder 2,
**dadurch gekennzeichnet, dass**
am Zerkleinerungs- oder Mischraum ein Dosierer zur Zugabe von Hilfsstoffen angeschlossen ist.

4. Verfahren nach einem der vorangegangenen Ansprüche,
**dadurch gekennzeichnet, dass**
die der Folienumhüllung (8; 10) entnommenen Brätrohlinge (11) einer Geschmacks- und/oder das Aussehen verändernden Nachbehandlung unterzogen werden.

5. Verfahren nach Anspruch 4,
**dadurch gekennzeichnet, dass**
eine Nachbehandlung mit Flüssigrauch, Gewürzen und/oder Edelschimmel erfolgt.

6. Verfahren nach einem der vorangegangenen Ansprüche,
**dadurch gekennzeichnet, dass**
bei der Herstellung von Brühwurst- oder Kochwurstbrät eine Flüssigkeitszugabe erfolgt.

7. Verfahren nach einem der Ansprüche 1 bis 6,
**dadurch gekennzeichnet, dass**
eine Vortrocknung in einem vorgelagerten Vormischschritt der Ausgangskomponenten erfolgt.

8. Verfahren nach Anspruch 1,
**dadurch gekennzeichnet, dass**
im Zerkleinerungs- oder Mischraum ein Unterdruck erzeugbar ist, um die Förderung des Gutes durch den oder die Zerkleinerer (5) zu beschleunigen.

## Claims

1. A method for the automatable production of raw sausage by cutting and blending of meat parts or meat pieces and adding of starter cultures, spices and similar substances,
**characterized in that**
the meat parts or meat pieces are supplied as a feed material (3) via a transport system, which can be operated separately from the cutter (5) on the drive side, to the cutting space as a function of the capacity of the cutter(s) (5), wherein the feeding is performed such that an upsetting and temperature increase and thus a damage to the feed material is avoided, wherein an extruder, optionally a roller extruder in the manufacturing of fine sausage meat, is employed as the cutter (5), and moreover the cutting space is separate from, yet can be coupled to the blending space, so as to be able to perform a simple switchover for various cutters (5) depending on the product to be processed,
the material present in a loose structure, having been portioned or weighed, is filled into a film bag or is placed onto a bottom film (8), moreover a top film (10) is applied and enclosed air removed, the material or sausage meat (9) is shaped within the water-impermeable films (8; 10) and remains exposed to a pressure treatment until the isoelectric point is reached within the material,
the sausage meat (9) situated in the foil (8; 10) is subject to a temperature control during the maturing phase in order to control the activity of the microorganisms responsible for the maturing process,
and that the pre-shaped sausage meat preforms (11) are exposed to a high-pressure treatment for inactivating the microorganisms and thereafter withdrawn from the film envelope (8; 10), subjected to a drying step and further processed.

2. The method according to claim 1,
**characterized in that**
the material (3) is exposed to a vacuum in the cutting and blending space.

3. The method according to claim 1 or 2,
**characterized in that**
a dosing unit is connected to the cutting and blending space for adding additives.

4. The method according to any one of the preceding claims,
**characterized in that**
the sausage meat preforms (11) that are withdrawn from the film envelope (8; 10) are subjected to an after-treatment changing the taste and/or appearance.

5. The method according to claim 4,
**characterized in that**
the after-treatment is performed using liquid smoke, spices and/or edible mould.

6. The method according to any of the preceding claims,
**characterized in that**
an addition of liquid is performed in the manufacturing of boiled sausage or cooked sausage meat.

7. The method according to any one of claims 1 to 6,
**characterized in that**
pre-drying is performed in an upstream step of pre-blending the initial components.

8. The method according to claim 1,
**characterized in that**
a negative pressure can be generated in the cutting or blending space in order to accelerate the transport of the material through the cutter(s) (5).

## Revendications

1. Procédé pour la fabrication, susceptible d'être automatisée, de saucisses crues par broyage et mélange de parties ou de morceaux de viande et addition de ferments, d'épices ou produits similaires, **caractérisé en ce que**
les parties ou les morceaux de viande sont amené(e)s sous forme de produit d'apport (3) à la chambre de broyage via un système de transport susceptible de fonctionner séparément du broyeur (5) pour ce qui concerne l'entraînement, en fonction des performances du broyeur (5) ou des broyeurs, et l'amenée a lieu de telle façon que l'on évite un bourrage ainsi qu'une augmentation de température et donc un endommagement du produit d'apport, dans lequel on emploie comme broyeur (5) une extrudeuse et, lors de la production de chair à saucisse fine en particulier une extrudeuse à cylindre, et en outre la chambre de broyage est séparée de la chambre de mélange, mais susceptible d'être accouplée à celle-ci, afin de pouvoir procéder, selon le produit à traiter, à une adaptation simple pour différents broyeurs (5),
le produit qui se présente dans une structure meuble est portionné ou soumis à une pesée, rempli dans un sac en film ou parvient sur un film inférieur (8), on applique ensuite un film supérieur (10) et l'air emprisonné est éliminé,
le produit ou la chair à saucisse (9) est mis(e) en forme à l'intérieur des films imperméables (8 ; 10) et reste soumis(e) à un traitement sous pression jusqu'à atteindre un point isoélectrique dans le produit,
la chair à saucisse (9) qui se trouve dans le film (8 ; 10) est soumise, pendant la phase de maturation, à une températion afin de contrôler l'activité des micro-organismes responsables pour le processus de maturation,
et **en ce que** les ébauches de chair à saucisse mise(s) sous forme préalable (11) sont soumises à un traitement sous haute pression pour rendre les micro-organismes inactifs et l'enveloppe en film (8 ; 10) est ensuite enlevée, les ébauches sont soumises à une étape de séchage et à un traitement postérieur.

2. Procédé selon la revendication 1,
**caractérisé en ce que** le produit (3) est exposé à un vide dans la chambre de broyage est de mélange.

3. Procédé selon la revendication 1 ou 2,
**caractérisé en ce qu'**un appareil de dosage pour l'addition de produits auxiliaires est raccordé à la chambre de broyage ou de mélange.

4. Procédé selon l'une des revendications précédentes,
**caractérisé en ce que** les ébauches de chair à saucisse (11) enlevées hors de l'enveloppe en film (8 ; 10) sont soumises à un traitement postérieur qui modifie le goût et/ou l'aspect.

5. Procédé selon la revendication 4,
**caractérisé en ce qu'**un traitement postérieur a lieu au moyen de fumées liquides, d'épices et/ou de moisissures nobles.

6. Procédé selon l'une des revendications précédentes,
**caractérisé en ce que** lors de la fabrication de chair à saucisse à cuire, on effectue un apport de liquide.

7. Procédé selon l'une des revendications 1 à 6,
**caractérisé en ce qu'**un séchage préalable a lieu dans une étape de mélange préalable des composants de départ, effectuée à l'avance.

8. Procédé selon la revendication 1,
**caractérisé en ce qu'**une dépression peut être engendrée dans la chambre de broyage ou de mélange, afin d'accélérer le convoyage du produit à travers le ou les broyeur(s) (5).
